# EUROPEAN PATENT APPLICATION

(11) **EP 2 072 347 A1**
(43) Date of publication of application: **24.06.2009**
(21) Application number: 07382002.9
(22) Date of filing: 19.12.2007
(51) Int. Cl.: B60R 21/231

(54) **Airbag module with optimised interior volume**

(71) Applicant: Dalphi Metal España, S.A., 28006 Madrid (ES)
(72) Inventor: Peyre, Jean-Christophe, 47151, Valladolid (ES); Martín, Roberto, 47151, Valladolid (ES); Ramos, Ramón, 47151 Valladolid (ES)
(74) Representative: Elzaburu Marquez, Alberto

(57) **Abstract**

Airbag module bag (1) for protecting the occupants of a vehicle in the event of collision of this vehicle, where this bag (1) comprises at least an upper panel (2) and at least a lower panel (3), one or more panels comprising in their fabric one or more pins (5) that make that the shape of the bag (1) changes obtaining shapes that are adapted to the protection necessities of the occupants in the event of collision of the vehicle.

## Description

### FIELD OF THE INVENTION

This invention refers to an airbag module used in automobiles to cushion the blows suffered by passengers in the event of crashes or collisions, in which the interior volume required for passenger protection is minimised.

### BACKGROUND OF THE INVENTION

At present, vehicles include numerous passive safety devices that should jointly work together on a programmed basis at the time of a hypothetical collision, in order to minimise the risk of injury to the vehicle's occupants. The combination of different passive systems, such as airbag modules, single hull structures with programmed deformation, seats, safety belts, collapsible steering columns, etc., means that a series of accumulative tolerances are generated that are inherent to their adjustment and operation.

On the other hand, one function of the above mentioned passive systems is to ensure their proper operation and their features in a wide range of vehicle occupant positions, as well as to adapt to various collision speeds, always accounting for the different regulated and consumer configurations (EuroNcap, IIHS, etc.) of crashes on barriers and posts and the expected evolutions of these configurations in terms of increased impact speed, barrier changes, etc.

Thus, airbag modules basically consist of a folded bag that rapidly inflates by means of a gas produced by a generator when certain sensor devices detect a vehicle collision. As a result, the bag unfolds between the vehicle occupant and an area of the vehicle, protecting the occupant during the collision.

According to the above explanation, the need arises to optimise the interior volume of the airbag modules required for the proper protection of the occupants of a vehicle in the event of a collision or crash, effectively addressing the requirements set forth above.

In the technology, there are documents that optimise the shape of the unfolded bag of an airbag module for different purposes. For example, document EP 1686017 describes an airbag module in which the volume of the unfolded bag is limited by the way it unfolds in the event of a sidelong collision. Document EP 1107884 describes an airbag module whose inflation time is delayed so that the volume of the unfolding bag in the direction of the impact area is limited. On the other hand, there are documents, such as EP 881130, in which the volume of the airbag module is limited, dividing the bag into a certain number of chambers.

On the other hand, the known solutions in the state of the art are only used to protect the driver of the vehicle in the event of a vehicle collision.

There is therefore a need to improve the coupling of the unfolded bag of an airbag module to the vehicle dashboard, and at the same time reduce the unfolded length of the bag. The current known solution of installing interior positioning straps in the bag so that it adapts to the vehicle dashboard when it unfolds has the drawback that it does not optimally adapt to the dashboard of the vehicle in question, and at the same time the cost of the bag with straps is very high.

This invention is intended to overcome these drawbacks.

### SUMMARY OF THE INVENTION

This invention proposes an airbag module that comprises a bag, which in turn comprises two panels, one above and the other below, with an optimised length of the upper and lower panels and with the following purposes or objectives: improve the coupling of the unfolded bag to the vehicle dashboard, reduce the frontal length of the bag in order to minimise the interior volume of the bag required to protect the occupants of the vehicle in the event of collision, and at the same time eliminate the interior positioning straps. The invention achieves these effects by means of a fold and a stitch or some other type of bonding in the lower panel of the bag (it will be referred to as pin from now on) to minimise its interior volume and at the same time to effectively respond to the requirements in the event of a vehicle collision.

Other features and advantages of this invention will be found in the following detailed description of an illustrative execution of its object in relation to the accompanying figures.

### DESCRIPTION OF THE FIGURES

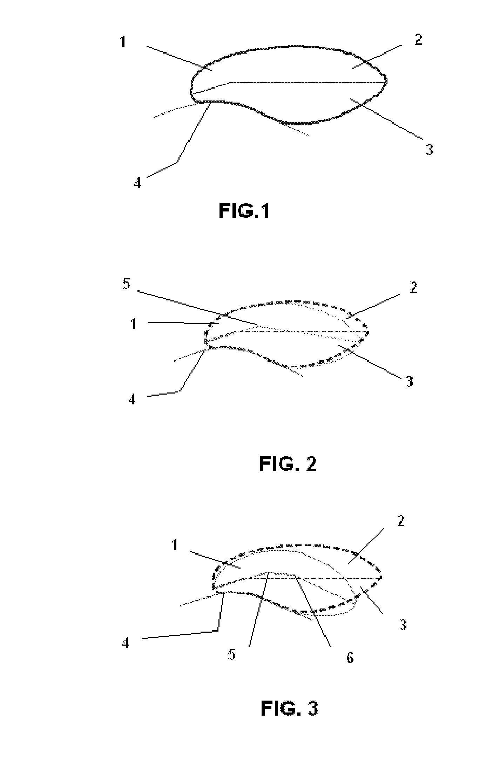

Figure 1 shows an unfolded conventional airbag module bag without pins.
Figure 2 shows an unfolded airbag module with one pin according to a first execution of this invention.
Figure 3 shows an unfolded airbag module with two pins according to a second execution of this invention.

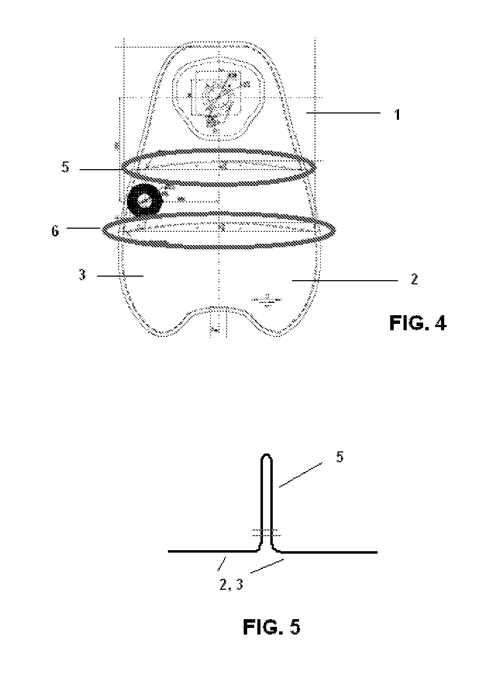

Figure 4 shows a section of an airbag module with two pins according to a second execution of this invention.
Figure 5 shows a section of the pin of an airbag module according to the invention.

### DETAILED DESCRIPTION OF THE INVENTION

The invention consists of an airbag module bag 1 for protecting the occupants of a vehicle in the event of collision of this vehicle; this bag 1 comprises an upper panel 2 and a lower panel 3, such that the lower panel 3 comprises in its fabric, according to a first execution of the invention, at least one pin 5 that makes the shape of the full bag 1 better adapt to the board 4, succeeding in this way to reduce the volume in the bag 1. Thus the bag 1, on unfolding, bends due to the pin 5, releasing the board 4 and pushing the bag 1 downwards (direction -z) in the process of unfolding without having to use interior straps and without using the windscreen to redirect its form.

The invention succeeds in this way to improve the coupling of the unfolded bag 1 to the dashboard 4 of the vehicle and at the same time to reduce the frontal length of the bag 1 in order to minimise the interior volume of the bag 1 required to protect the vehicle occupants in the event of collision. It likewise eliminates the interior positioning straps, which are additional, more expensive fabrics and harder to build.

The invention achieves the above effects by means of at least one pin 5 in the bag 1, although the bag 1 bends even more and adapts even better to the dashboard 4 the more pins (5, 6) are included in its lower panel 3. This makes the bag 1, according to the invention, highly versatile and means it can be designed so as to better adapt to the above mentioned board 4, regardless of the shape of this board 4.

According to a second execution of the invention, the lower panel 3 of the bag 1 of the airbag module includes two pins 5, 6 in its fabric.

The advantages obtained with the airbag module bag 1, according to the invention, are as follows:
- The lower panel fabric pins improve the coupling of the bag to the board.
- The length in x of the bag is reduced, and the necessary interior volume can be decreased.
- The interior positioning straps are eliminated.

Those modifications included within the scope defined by the following claims can be added to the preferential executions described above.

## Claims

1. Airbag module bag (1) for protecting the occupants of a vehicle in the event of collision of this vehicle, where this bag (1) comprises at least an upper panel (2) and at least a lower panel (3), **characterised in that** one or more panels comprise in their fabric one or more pins (5) that make that the shape of the bag (1) changes obtaining shapes that are adapted to the protection necessities of the occupants in the event of collision of the vehicle.

2. An airbag module bag (1) according to claim 1 **characterized in that** the lower panel (3) comprises in its fabric a pin (5) that makes the shape of the full bag (1) better adapt to the dashboard (4) of the vehicle, improving the coupling of the unfolded bag (1) to the board (4) and at the same time reducing the frontal length of the bag (1) in order to minimise the interior volume of this bag (1) required to protect the occupants of the vehicle in the event of collision.

3. Airbag module bag (1) according to claim 1, **characterised in that** the lower panel (3) comprises in its fabric two pins (5, 6) to adapt the full bag (1) to the dashboard (4) of the vehicle.

4. Airbag module bag (1) according to claim 1, **characterised in that** the lower panel (3) comprises in its fabric several pins, comprising the more pins the more necessary it is for this bag (1) to bend in order to properly adapt to the dashboard (4) of the vehicle.
